# EUROPÄISCHE PATENTSCHRIFT

(11) **EP 1 276 633 B1**
(45) Veröffentlichungstag und Bekanntmachung des Hinweises auf die Patenterteilung: **21.09.2005**
(21) Anmeldenummer: 01940120.7
(22) Anmeldetag: 04.04.2001
(51) Int. Cl.: B60N 2/04, B60N 2/02, B60N 2/18, B60N 2/39

(54) **EINRICHTUNG ZUR ÜBERTRAGUNG VON STELLBEWEGUNGEN AN FAHRZEUGSITZEN**
DEVICE FOR TRANSMITTING ADJUSTING MOVEMENTS TO VEHICLE SEATS
DISPOSITIF POUR TRANSMETTRE DES MOUVEMENTS DE REGLAGE A DES SIEGES DE VEHICULE

(30) Priorität: 18.04.2000 DE 10019220
(43) Veröffentlichungstag der Anmeldung: 22.01.2003
(73) Patentinhaber: ROBERT BOSCH GMBH, 70442 Stuttgart (DE)
(72) Erfinder: URSEL, Eckhard, 77815 Buehl (DE); GENTER, Gerhard, 77855 Achern (DE); WINTER, Manfred, 77839 Lichtenau (DE); HAUSSECKER, Walter, 77830 Buehlertal (DE); SCHILLER, Herbert, 77830 Buehlertal (DE); MAENNLE, Erik, 77704 Oberkirch (DE); HARTZ, Guenter, 77830 Buehlertal (DE); WOLF, Joerg, 76139 Karlsruhe (DE); PROHASKA, Werner, 77833 Ottersweier (DE); STEUER, Martin, 3300 Tienen (BE); LINDE, Hansjuergen, 96450 Coburg (DE); NEUMANN, Uwe, 96050 Bamberg (DE); REHKLAU, Andreas, 96450 Coburg (DE); SCHEER, Dieter, 54439 Fisch (DE)
(86) Internationale Anmeldenummer: PCT/DE2001/001305
(87) Internationale Veröffentlichungsnummer: WO 2001/079021

(56) Entgegenhaltungen:
- EP-A- 0 636 512
- WO-A-97/48570

## Beschreibung

### Technisches Gebiet

Insassen von Kraftfahrzeugen können ihre Sitzposition in diesen generell nur statisch vorwählen. In der Regel erfolgt während der Fahrt keine Verstellung der Sitzposition, die Sitzposition der Fahrzeuginsassen paßt sich den sich ergebenden Fahrsituationen des Fahrzeuges nicht automatisch an.

### Stand der Technik

Bei bisher bekannten und heute üblichen Kraftfahrzeugsystemen wählen die Fahrzeuginsassen vor Beginn der Fahrt die ihnen jeweils günstige und am komfortabelsten erscheinende Sitzposition im Fahrzeug individuell vor. Während der Fahrt sind die Fahrzeuginsassen generell Schubkräften, resultierend aus der Querbeschleunigung beispielsweise während der Passage von Kurven, ausgesetzt. Ferner treten Schubkräfte auf, die aus Brems- und Verzögerungsphasen während der Fahrt des Kraftfahrzeuges resultieren können. Während der Fahrt ergeben sich aufgrund der auftretenden und auf die Insassen einwirkenden dynamischen, fahrsituationsabhängigen Kräfte Schubspannungen zwischen den Polstern der Fahrzeugsitze und den Insassen des Fahrzeuges, die den Fahrzeuginsassen durchaus als unangenehm erscheinen können. Dies gilt insbesondere dann, wenn der Betrag der auftretenden Schubspannungen den jeweiligen persönlich gerade noch akzeptablen Grenzwert für die Fahrzeuginsassen überschreitet.

### Darstellung der Erfindung

Die Erfindung geht von einer Einrichtung zur Übertragung von Verstellbewegungen an Fahrzeugsitzen gemäß Oberbegriff des Anspruchs 1 aus (wie z.B. aus der WO-A-97/48570 bekannt) und ist durch dessen Merkmals Kombination definiert; Weitere Merkmale der Erfindung sind in den abhängigen Ansprüchen angegeben.

Durch die Entkopplung der Verstelleinheiten, die unterhalb der zu bewegenden Sitzfläche eines Fahrzeugsitzes aufgenommen sind, läßt sich eine Trennung von quasistatischer und dynamisch erfolgender, sphärischer Sitzverstellung realisieren. Bei einem Ausfall des dynamisch arbeitenden Sitzverstellsystems verbliebe das quasistatisch arbeitende Verstellsystem zur Änderung der Position der Sitzfläche. Werden beispielsweise Sitzflächenunterbauten eingesetzt, die an vier Starrlenkern aufgenommen sind, kann zur verdrehsicheren Längs- und Querverstellung der Sitzfläche, sowie zum Neigen des Fahrzeugsitzes um seine Querachse eine Verstelleinheit vorgesehen sein, die mit einer Drehfessel in Gestalt eines Koppelgliedes ausgerüstet ist und somit streng translatorische Bewegungen der Sitzflächen in Längs- und Querrichtungen erzeugt; andererseits kann über den Versteller davon unabhängig ein Kippen der Sitzfläche des Fahrzeugsitzes um die Querachse erfolgen. Das Koppelglied dient als Drehfessel und nimmt gleichzeitig den Versteller für die Sitzfläche auf.

Mit einer weiteren Ausführungsvariante der Verstelleinrichtung für einen Fahrzeugsitz läßt sich der Versteller mit zwei voneinander unabhängigen Verstelleinheiten bewegen, die unterhalb der Sitzfläche angeordnet werden können. Mit dieser Variante eines Verstellsystems lassen sich an drei Anlenkpunkten gelagerte Sitzflächen von Fahrzeugsitzen bewegen, die keiner Verdrehsicherung bedürfen. Als Verdrehsicherung fungiert bei diesen an drei Anlenkpunkten gelagerten Sitzflächen der jeweils vordere Anlenkpunkt, um den die Sitzfläche entsprechend der Kurvenneigung des Fahrzeuges fahrsituationsabhängig verkippt werden kann oder die Sitzfläche um die Querachse des Fahrzeugsitzes geneigt werden kann.

Die bei den beiden Ausführungsvarianten jeweils eingesetzten Lenker sind so beschaffen, daß sie innerhalb tolerierbarer Grenzen verdrillbar sind. Es lassen sich an den Lenkern jeweils torsionsweiche und biegeweiche Endbereiche ausbilden.

Die Endbereiche können mit Elastomerlagern, Sphärolagern, oder auch Bundlagern versehen werden, wobei die Lenker - ähnlich wie bei Antriebswellen - einen als Längenausgleich fungierendes axial verschiebbares Mehrkeilprofil enthalten können, welche die sich bei der Relativbewegung der Sitzfläche zu den Sitzschienen ergebenden jeweiligen Längenänderungen an den Lenkern ausgleicht. Werden Elastomerlager verwendet, lassen sich in vorteilhafter Weise deren dämpfende Eigenschaften nutzen, so daß sich ein als komfortabel empfundenes erschütterungsfreies Verstellen der Sitzfläche sowohl bei quasistatischer Ansteuerung als auch bei dynamischer Ansteuerung der Verstelleinheiten der Sitzfläche des Fahrzeugsitzes fahrsituationsabhängig erzielen läßt.

### Zeichnung

Anhand der Zeichnung wird die Erfindung nachstehend näher erläutert.

Es zeigt:
- Fig. 1: eine an vier Starrlenkern aufgenommene Sitzfläche, die an deren Unterseite angelenkt sind und die durch einen Versteller bewegbar ist,
- Fig. 2: eine schematische Darstellung des sich einstellenden Momentanpols einer Sitzflächenlagerung gemäß Fig. 1,
- Fig. 3: eine Draufsicht auf eine Verstelleinheit mit Koppelglied,
- Fig. 4: eine perspektivische Ansicht der Verstelleinheit gemäß Fig. 3,
- Fig. 5: eine Draufsicht auf eine alternative Ausführungsvariante einer Verstelleinheit,
- Fig. 6: eine perspektivische Ansicht der Verstelleinheit gemäß Fig. 5,
- Fig. 7, 8: Starrlenker mit biegeweichen und torsionsweichen Bereichen und Längenausgleich samt angelenkten Endbereichen und,
- Fig. 9: ein Elastomerlager in Ansicht und Schnitt und
- Fig. 10: verschiedene Anlenklagertypen für Starrlenker.

### Ausführungsvarianten

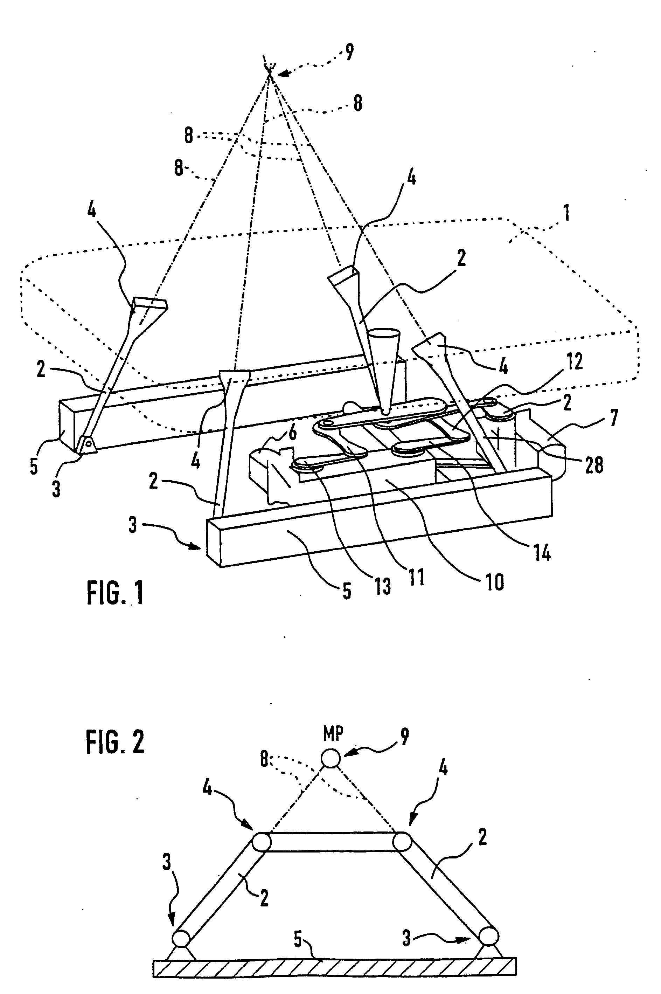

Fig. 1 zeigt eine an vier Starrlenkern aufgenommene Sitzfläche eines Fahrzeugsitzes, die an deren Unterseite durch einen dort angreifenden Versteller bewegbar ist.

Eine in der Darstellung gemäß Fig. 1 nur angedeutete Sitzfläche 1 eines Fahrzeugsitzes ist durch vier Starrlenker 2 abgestützt, die jeweils einen unteren Anlenkpunkt 3 sowie einen oberen Anlenkpunkt 4 aufweisen. Mit ihrem oberen Anlenkpunkt 4 sind die Starrlenker 2 mit der Unterseite der Sitzfläche 1 gelenkig verbunden, während sie mit ihren jeweiligen unteren Anlenkpunkten gelenkig mit Sitzschienen 5 verbunden sind, die sich am Fahrzeugboden in Längsrichtung der Sitzfläche 1 erstrecken. Zwischen den Sitzschienen 5 befinden sich ein erster Antrieb 6 sowie ein zweiter Antrieb 7.

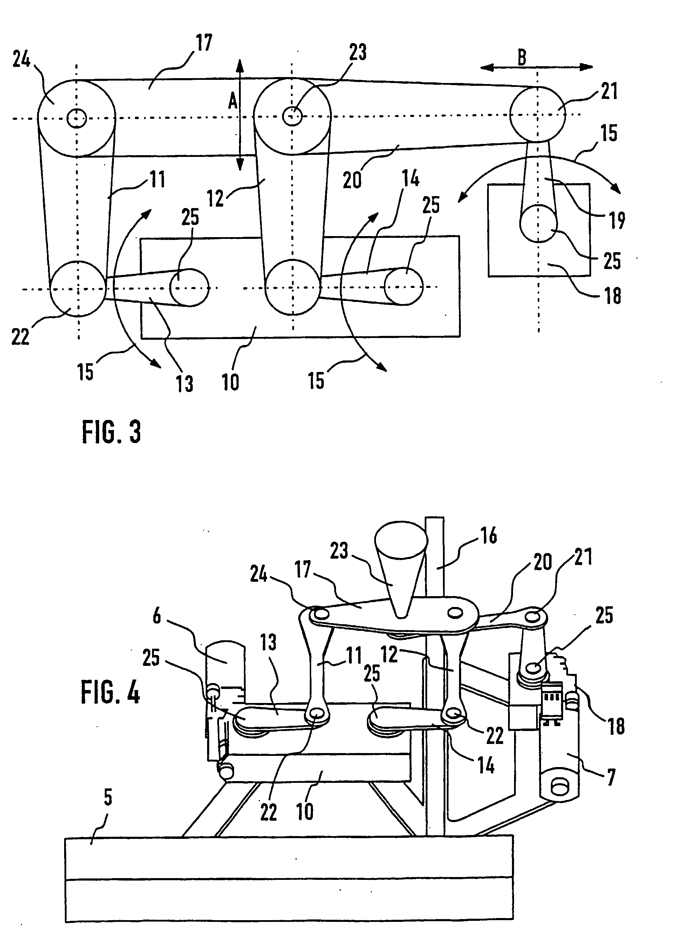

Etwa mittig unterhalb der Sitzfläche 1 befindet sich eine erste Verstelleinheit 10, an deren abtriebsseitig vorgesehenen Wellen jeweils ein erster sowie ein zweiter Treibhebel 13 bzw. 14 aufgenommen ist. Diese sind über zwei Zwischenhebel 11 bzw. 12 mit einem Koppelglied 17 verbunden (vgl. Fig. 3). Die erste Verstelleinheit 10 dient der Verstellung der Neigung der Sitzfläche 1 um deren Längsachse. Der weitere Antrieb 7 wirkt auf eine zweite Verstelleinheit ein, die unterhalb des hinteren Bereiches der Sitzfläche 1 vorgesehen ist und welche zum Kippen der Sitzfläche 1 des Fahrzeugsitzes um deren Querachse dient. In der Darstellung gemäß Fig. 1 sind den Positionen der Starrlenker 2 entsprechende gedachte Verlängerungen 8 eingezeichnet, die sich im Momentalpol 9 schneiden, der sich in einem Abstand von der Oberfläche der Sitzfläche 1 befindet.

Die Sitzfläche 1 ist gemäß Fig. 1 an vier Punkten von Starrlenkern 2 unterstützt und gelagert, während sie über einen hier in Kegelform dargestellten Versteller 23 um die Längsachse geneigt bzw. um die Querachse gekippt werden kann.

Fig. 2 zeigt eine schematische Darstellung des sich einstellenden Momentanpoles einer Sitzflächenlagerung gemäß der in Fig. 1 wiedergegebenen Konfiguration.

Die Sitzfläche 1 bildet, an den oberen Anlenkpunkten 4 der Starrlenker 2 mit diesen verbunden, eine Viergelenkkette. Diese hat, unter Einbeziehung der Sitzschiene 5, ein trapezförmiges Aussehen. Beide jeweils aus zwei Starrlenkern 2 und der an dieser angelenkten Sitzfläche 1 gebildeteten Viergelenkketten sind geneigt zueinander angeordnet und stehen in Bezug auf die horizontale Sitzfläche 1 schräg zueinander. Auch in der Fig. 2 sind die gedachten Verlängerungen 8, die parallel zu den Starrlenkern 2 verlaufen, dargestellt, die sich im Momentanpol 9 oberhalb der Sitzfläche 1 des Fahrzeugsitzes schneiden.

Fig. 3 zeigt die Draufsicht auf eine Verstelleinheit mit Koppelglied.

An den Abtrieben 25 der ersten Verstelleinheit 10 sind jeweils ein erster und ein zweiter Treibhebel 13 bzw. 14 aufgenommen, durch die Abtriebe 25 eine Verdrehbewegung 15 entsprechend der dargestellten Doppelpfeile aufgeprägt wird. Zwischenhebel 11 bzw. 12 sind beidseits des Koppelgliedes 17 aufgenommen und gelenkig mit diesem verbunden. Auf dem Koppelglied 17 befindet sich ein kegelförmig ausgebildeter Versteller 23, der mit der in Fig. 3 nicht dargestellten Unterseite der Sitzfläche 1 fest verbunden ist. Mittels des als Drehfessel für den Versteller 23 dienenden Koppelgliedes 17 wird eine Verdrehung der Sitzfläche 1 um deren parallel zum Versteller 23 verlaufende Hochachse verhindert. Berücksichtigt man die Aufnahme der Sitzfläche 1 an vier an der Unterseite der Sitzfläche 1 angelenkten Starrlenker 2, bewirkt eine Bewegung des Verstellers 23 in eine Richtung des Doppelpfeiles A eine Schrägstellung der horizontal gelagerten Sitzfläche 1, bezogen auf deren parallel zu den Sitzschienen 5 verlaufende Längsachse.

Die schräg in Längsrichtung zueinander stehenden Starrlenker 2 werden paarweise durch die sich bewegende Sitzfläche 1 nach unten ausgelenkt, während das gegenüberliegende Paar Starrlenker 2 aufgerichtet wird, wodurch sich eine fahrsituationsabhängige Neigung der Sitzfläche 1 um deren Längsachse ergibt.

Aus der Darstellung gemäß Fig. 4 geht eine perspektivische Ansicht der Verstelleinheit gemäß Fig. 3 hervor.

Über einen Zwischenhebel 20 ist ein Abtrieb 25 einer weiteren Verstelleinheit 18 mit dem Versteller 23 unterhalb des Koppelgliedes 17 gelenkig verbunden. Bei der Bewegung des Zwischenhebels 20 aufgrund der Drehbewegung 15 des Treibhebels 19 um den Abtrieb 25 der zweiten Verstelleinheit stellt sich eine Bewegung des Verstellers 23 in eine Richtung des Doppelpfeiles B ein. Unter Berücksichtigung der an vier Ecken angelenkten Sitzfläche 1 ergibt sich beim Verfahren des Verstellers 23 in eine der Richtungen des Doppelpfeiles B ein Kippen der Sitzfläche 1 des Fahrzeugsitzes um dessen Querachse.

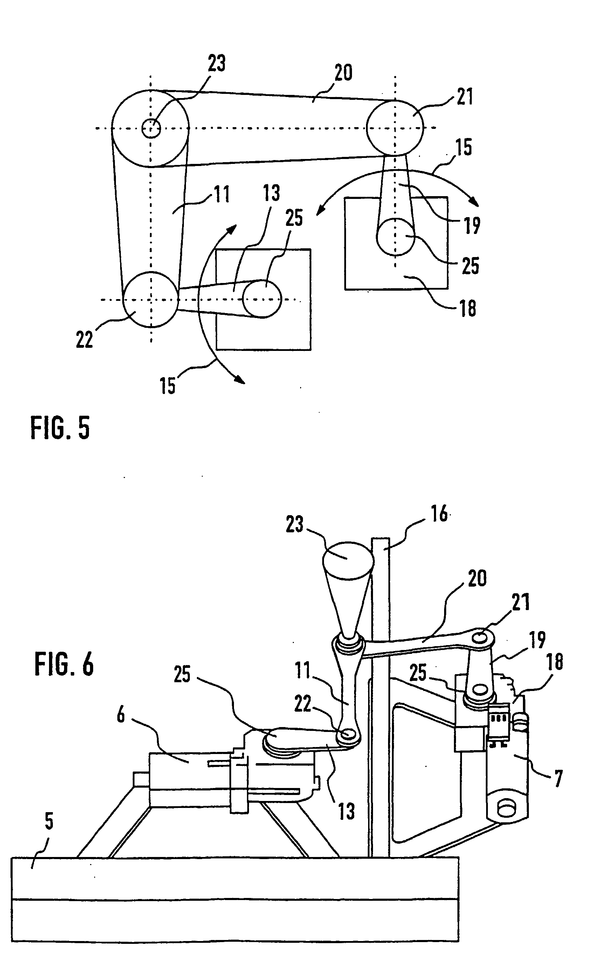

Fig. 5 zeigt eine Draufsicht auf eine alternative Ausführungsvariante einer Verstelleinheit.

Bei dieser Variante einer unterhalb einer Sitzfläche 1 angeordneten Sitzverstellung kann eine Drehfessel in Gestalt eines Koppelgliedes gemäß der zuvor beschriebenen Ausführungsvariante entfallen. Die Verdrehsicherung wird bei Sitzflächen 1 gemäß der Ausführungsvariante in Fig. 5 durch die Lagerung der Sitzfläche 1 an drei Punkten übernommen. So können zum Beispiel entweder die beiden vorderen Starrlenker 2 oder die beiden hinteren Starrlenker 2 unterhalb einer Sitzfläche 1 in einem einzigen Starrlenker zusammengefaßt werden, so daß die Sitzfläche an drei Punkten gelenkig gelagert ist. Auch in dieser Ausführungsvariante eines Verstellsystems ist der Versteller 23 unterhalb der in Fig. 5 nicht dargestellten Sitzfläche 1 mit dieser fest verbunden. Über den Abtrieb 25 eines ersten Verstellgetriebes 10 erfolgt ein Verschwenken des ersten Treibhebels 13 in eine Richtung des Doppelpfeiles 15. Die Verdrehbewegung 15 des ersten Treibhebels 13 wird durch den ersten Zwischenhebel 11 über das Gelenk 22 an den Versteller übertragen und bewirkt ein seitliches Verfahren des Verstellers 23, wodurch gemäß den Ausführungen zur Ausführungsvariante gemäß Fig. 3 ebenfalls ein seitliches Verfahren und damit eine Neigung der Sitzfläche 1 um deren Längsachse erzielt wird.

Über eine zweite Verstelleinheit 18, deren Abtrieb 25 mit einem Treibhebel 19 verbunden ist und diesem eine Drehbewegung 15 in eine Richtung der dargestellten Doppelpfeile aufprägt, erfolgt mittels eines Zwischenhebels 20, der am Treibhebel 19 in einem Anlenkpunkt angelenkt ist, ein Verfahren des Verstellers 23 in Längsrichtung, wodurch der an der Oberseite des Verstellers 23 befestigten - hier nicht dargestellten Sitzfläche 1 - eine Kippbewegung um die Querachse der Sitzfläche 1 aufgeprägt wird.

Aus Fig. 6 geht eine perspektivische Ansicht der Verstellvariante gemäß Fig. 5 hervor.

Die hier nur schematisch balkenförmig wiedergegebene Sitzschiene 5 nimmt über Verstrebungen jeweils die erste Verstelleinheit 10 sowie die zweite Verstelleinheit 18 auf. Jeder der Verstelleinheiten 10 bzw. 18 verfügt über einen unabhängigen, individuell ansteuerbaren elektrischen Antrieb 6 bzw. 7. Oberhalb der elektrischen Antriebe 6 bzw. 7 sind elektrische Anschlüsse vorgesehen, mit denen die elektrischen Antriebe mit der Spannungsversorgung, beispielsweise eines Kraftfahrzeuges, verbunden werden können.

Zwischen den Sitzschienen 5, von denen in der Darstellung gemäß Fig. 6 nur eine dargestellt ist, erstreckt sich eine Traverse 16, die den Freiraum zwischen den Sitzschienen überbrückt und dem Sitzunterbau der Sitzfläche 1 des Fahrzeugsitzes die notwendige Stabilität verleiht. An der Traverse sind überdies die Verstrebungen zur Lagerung der zweiten Verstelleinheit 18 aufgenommen, während an der Sitzschiene 5 die Verstrebung zur Lagerung der ersten Stelleinheit 10 aufgenommen sind. Aus der Darstellung gemäß Fig. 6 geht der kegelförmige Verlauf des Verstellers 23 hervor, der jedoch nicht zwangsläufig in dieser Konfiguration ausgebildet sein muß.

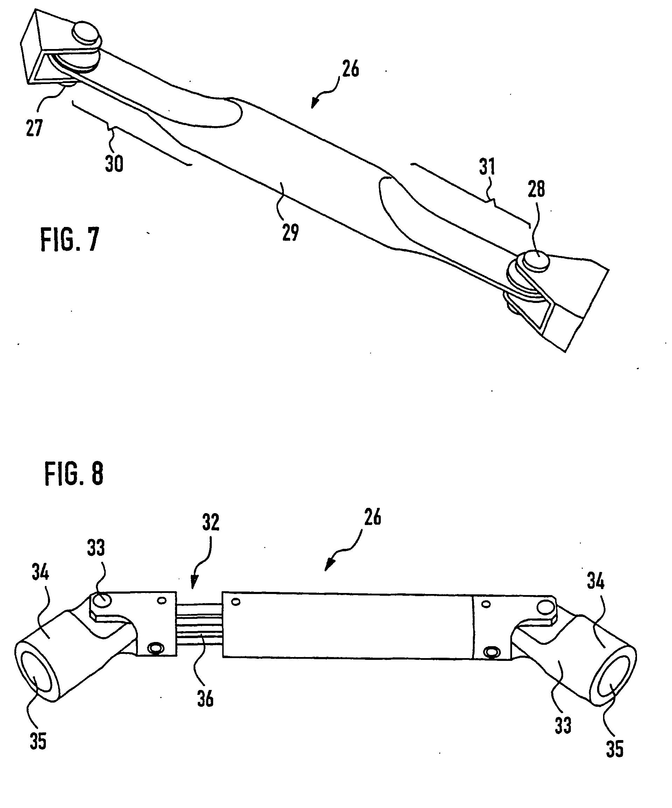

Aus den Fig. 7 und 8 gehen jeweils Starrlenker mit biegeweichen und torsionsweichen Bereichen sowie mit einem Längenausgleich samt angelenkten Endbereichen hervor.

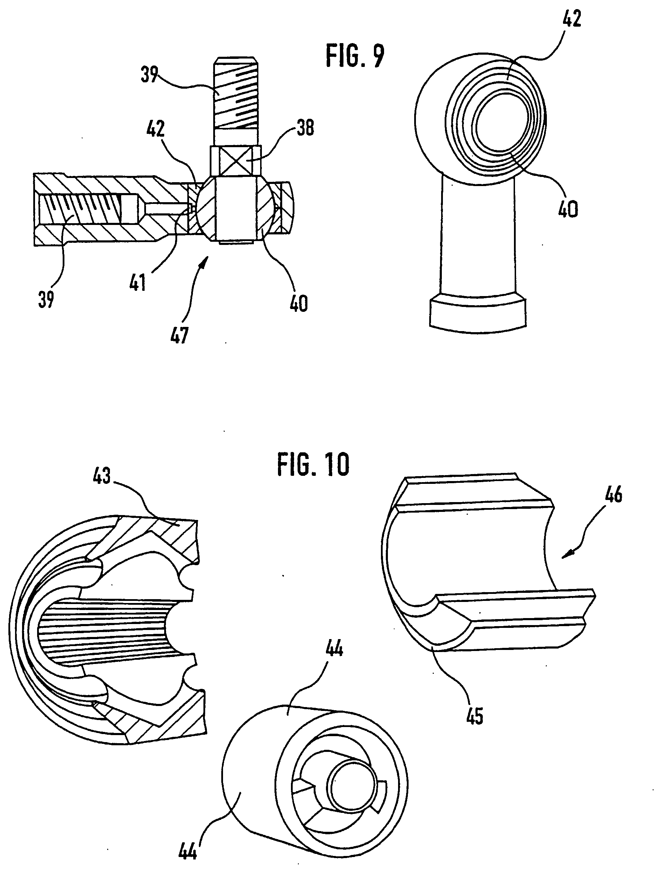

Ein Starrlenker 26 ist an beiden Enden jeweils mit einem Anlenkpunkt 27 bzw. 28 versehen, welche eine gelenkige Verbindung des Starrlenkers 26 mit anderen Bauteilen gestatten. Der Starrlenker 26 umfaßt einen mit verdicktem Durchmesser ausgeführten torsionsweichen Zwischenbereich, der mit Bezugszeichen 29 gekennzeichnet ist sowie zwei an diesen anschließenden und den Anlenkpunkten 27 bzw. 28 jeweils gegenüberliegenden biegeweichen Endbereichen 30, 31. Durch diese Ausführung des Starrlenkers 26 wird diesem eine höhere Ausfallsicherheit gegen Abreißen der jeweiligen Anlenkpunkte 27 bzw. 28 verliehen, so daß sich der Starrlenker 26 auch Verdrill- und Biegebeanspruchungen anpassen kann. Die an den Anlenkpunkten 27 bzw. 28 vorgesehenen Lager können beispielsweise gemäß der Fig. 9 und 10 als Elastomerlager 40, als Sphärolager 43, als Hydrobuchse 44 oder auch als Bundlager 45 ausgebildet sein, so daß eine Verdrehung des Starrlenkers 26 in allen drei Rotationsachsen in Grenzen möglich ist. Werden beispielsweise Elastomerlager verwendet, so wohnt diesem Starrlenker 26 ein Dämpfungsverhalten inne, welches positiv auf das Ansprechverhalten der Sitzverstellung Einfluß nimmt.

Gemäß einer weiteren Variante eines Starrlenkers 26 kann dieser als ein metallisches Bauteil ausgebildet sein, welches hohl ausgeführt ist und einen Längenausgleich 32 enthält. Der Längenausgleich 32 kann durch ein Mehrkeilprofil 36 gebildet werden, welches in eine mit korrespondierendem Profil ausgebildete Bohrung des Starrlenkers 26 verschiebbar und in diese ein- als auch ausfahrbar ist. Durch den Längenausgleich 32 lassen sich bei der Verstellbewegung der Sitzfläche 1 auftretende Längenänderungen des Starrlenkers 26 aufgrund der unterschiedlichen Verstellwege an den Anlenkpunkten einstellende Längenänderung kompensieren. An den Endbereichen des Starrlenkers 26 befinden sich in Gelenken 33 jeweils aufgenommene bewegbare Übergangsstücke 34, die ihrerseits mit einer Bohrung 35 versehen sein können oder eine andere formschlüssige Anschlußkonfiguration aufweisen können.

Aus der Darstellung gemäß Fig. 9 geht ein Elastomerlager in Ansicht und im Querschnitt hervor.

Das Elastomerlager besteht aus einer Schale 40 sowie einer diese umgebenden Lagerkörper 42. An die Schale 40 schließt sich ein Werkzeugsansatz 38 an, an den sich ein Gewindeabschnitt 39 anschließen kann. Der Lagerkörper 42 ist in einem Übergangsstück gelagert, welches mit einem Innengewinde 39 versehen sein kann. Vom Innengewinde 39 erstreckt sich eine Schmiermittelbohrung 41 zur Kontaktfläche des Lagerkörpers 42 mit der Schale 40 zur Zufuhr eines Schmiermittels, so daß die Reibung zwischen der Schale 40 und dem Lagerkörper 42 deutlich herabgesetzt werden kann.

In Fig. 10 sind verschiedene Anlenklagertypen für Starrlenker dargestellt.

An den biegeweichen Endbereichen 31 bzw. 30 eines Starrlenkers 26 lassen sich Lagerelemente aufnehmen, die eine gewisse Verdrehung des Starrlenkers 26 in alle drei Rotationsachsen tolerieren. Die als Lagervarianten in Frage kommenden Sphärolager 43 oder Hydrobuchsen 44 oder Bundlager 45 stellen abreißsichere Lagerungsmöglichkeiten für einen innerhalb einer Sitzverstellung aufgenommenen Starrlenker 2 bzw. 26 dar, so daß den einzelnen - beispielsweise bei der Konfiguration gemäß Fig. 1 verwendeten Starrlenkern 2 - eine gewisse Drehbarkeit und Verdrillbarkeit innewohnt, was die Standzeit der verwendeten Starrlenker 2 oder 26 bei ihrem Einsatz nicht unerheblich verlängert.

### Bezugszeichenliste

- 1: Sitzfläche
- 2: Starrlenker
- 3: unterer Anlenkpunkt
- 4: oberer Anlenkpunkt
- 5: Sitzschiene
- 6: erster Antrieb
- 7: zweiter Antrieb
- 8: gedachte Verlängerung
- 9: Momentanpol
- 10: erste Verstelleinheit
- 11: erster Zwischenhebel
- 12: zweiter Zwischenhebel
- 13: erster Treibhebel
- 14: zweiter Treibhebel
- 15: Verdrehbewegung
- 16: Traverse
- 17: Koppelglied
- 18: zweite Verstelleinheit
- 19: Treibhebel
- 20: Zwischenhebel
- 21: Anlenkpunkt
- 22: Gelenk
- 23: Versteller
- 24: Gelenk
- 25: Abtrieb Verstelleinheiten
- 26: Lenker
- 27: Anlenkpunkt
- 28: Anlenkpunkt
- 29: torsionsweicher Bereich
- 30: biegeweicher Bereich
- 31: biegeweicher Bereich
- 32: Längenausgleich
- 33: Gelenk
- 34: Übergangsstück
- 35: Bohrung
- 36: Mehrkeilprofil
- 37: Elastomerlager
- 38: Werkzeugansatz
- 39: Gewinde
- 40: Lagerschale
- 41: Schmierbohrung
- 42: Lagerkörper
- 43: Sphärolager
- 44: Hydrobuchse
- 45: Bundlager
- 46: Bohrung

## Patentansprüche

1. Einrichtung zur Übertragung von Verstellbewegungen an Fahrzeugsitzen (1), bei der zwischen den Antrieben (6, 7) und die Verstellbewegung übertragenden Lenkern (11, 12, 13, 14, 19, 20; 2, 26) Verstellgetriebe (10, 18) vorgesehen sind, **dadurch gekennzeichnet, daß** eine erste Verstelleinheit (10) mit an Abtrieben (25) angelenkten Lenkern (13, 14) zum Neigen der Sitzfläche (1) vorgesehen ist sowie eine zweite, von erster (10) entkoppelte Verstelleinheit (18), mit der (18) eine Längs-/Querverstellung der Sitzfläche (1) herbeigeführt wird.

2. Einrichtung gemäß Anspruch 1, **dadurch gekennzeichnet, daß** an der ersten Verstelleinheit (10) ein Koppelglied (17), eine Drehfessel für an Abtrieben (25) angelenkte Lenker (11, 12, 13, 14) angeordnet ist.

3. Einrichtung gemäß Anspruch 2, **dadurch gekennzeichnet, daß** die mit dem Koppelglied (17) versehene erste Verstelleinheit (10) unterhalb einer Sitzfläche (1) eines Fahrzeugsitzes aufgenommen ist, die an ihren Ecken in vier angelenkten Lenkern (2) bewegbar ist.

4. Einrichtung gemäß Anspruch 2, **dadurch gekennzeichnet, daß** die mit dem Koppelglied (17) versehene erste Verstelleinheit (10) unterhalb einer Sitzfläche (1) eines Fahrzeugsitzes aufgenommen ist, die in einem kulissenartigen Kugelschalensegment auf Leitführungen aufgenommen ist.

5. Einrichtung gemäß Anspruch 2, **dadurch gekennzeichnet, daß** das Koppelelement (17) eine Verdrehung der Sitzfläche (1) des Fahrzeugsitzes um die Hochachse parallel zu einem Versteller (23) verhindert.

6. Einrichtung gemäß Anspruch 5, **dadurch gekennzeichnet, daß** die Verstellbewegungen zur Neigung der Sitzfläche (1) sowie zum Kippen der Sitzfläche (1) um die Querachse über den Versteller (23) in die Sitzfläche (1) eingeleitet wird.

7. Einrichtung gemäß Anspruch 6, **dadurch gekennzeichnet, daß** der Versteller (23) sowohl über das Koppelglied (17) durch die erste Verstelleinheit (10) als auch über einen angelenkten Zwischenhebel (20) durch die zweite Verstelleinheit (18) bewegbar ist.

8. Einrichtung gemäß Anspruch 1, **dadurch gekennzeichnet, daß** ein Versteller (23) koppelfrei über Abtriebe (25) von Verstelleinheiten (18) anlenkbar ist, wobei die mit dem Versteller (23) verbundene Sitzfläche (1) an drei Lenkern (2) angelenkt ist.

9. Einrichtung gemäß Anspruch 1, **dadurch gekennzeichnet, daß** die Sitzfläche (1) des Fahrzeugsitzes sich dynamisch der Fahrsituation des Fahrzeuges entsprechend über die individuell ansteuerbaren Verstelleinheiten (6, 7; 10, 18) ansteuern läßt.

10. Einrichtung gemäß Anspruch 1, **dadurch gekennzeichnet, daß** die Lenker (2, 26) einen torsionsweichen Bereich (29) und an ihren Enden biegeweiche Bereiche (30, 31) aufweisen.

11. Einrichtung gemäß Anspruch 1, **dadurch gekennzeichnet, daß** die Lenker (2, 26) an ihren Enden mit Elastomerlagern (37) ausgestattet sind, die eine zu einem Lagerkörper (42) relativ bewegbare Lagerschale (40) enthalten.

12. Einrichtung gemäß Anspruch 1, **dadurch gekennzeichnet, daß** die Lenker (2, 26) einen Längenausgleich (32) umfassen und/oder mit Sphärolagern (43), Hydrobuchsen (44) oder Bundlagern (45) versehen sind.

13. Einrichtung gemäß Anspruch 1, **dadurch gekennzeichnet, daß** die Lenker (2, 26) an ihren Enden in Gelenken (33) angelenkte Übergangsstücke (34) enthalten, die einen formschlüssigen Anschluß an andere Bauteilen gestatten.

## Claims

1. Device for transmitting adjusting movements to vehicle seats (1), in which adjusting mechanisms (10, 18) are provided between the drives (6, 7) and control rods (11, 12, 13, 14, 19, 20; 2, 26) which transmit the adjusting movement, **characterized in that** a first adjusting unit (10) is provided with control rods (13, 14) which are articulated at output points (25) and are intended for inclining the seat surface (1), and a second adjusting unit (18) is provided which is decoupled from the first (10) and with which a longitudinal/transverse adjustment of the seat surface (1) is brought about.

2. Device according to Claim 1, **characterized in that** a coupling element (17), a rotary shackle for control rods (11, 12, 13, 14) articulated at output points (25), is arranged on the first adjusting unit (10).

3. Device according to Claim 2, **characterized in that** the first adjusting unit (10), which is provided with the coupling element (17), is accommodated below a seat surface (1) of a vehicle seat, which seat surface can be moved at its corners in four articulated control rods (2).

4. Device according to Claim 2, **characterized in that** the first adjusting unit (10), which is provided with the coupling element (17), is accommodated below a seat surface (1) of a vehicle seat, which seat surface is accommodated on guiding mechanisms in a slotted-guide-like spherical shell segment.

5. Device according to Claim 2, **characterized in that** the coupling element (17) prevents the seat surface (1) of the vehicle seat from rotating about the vertical axis parallel to an adjuster (23).

6. Device according to Claim 5, **characterized in that** the adjusting movements for inclining the seat surface (1) and for tilting the seat surface (1) about the transverse axis are introduced into the seat surface (1) via the adjuster (23).

7. Device according to Claim 6, **characterized in that** the adjuster (23) can be moved both by the first adjusting unit (10) via the coupling element (17) and also by the second adjusting unit (18) via an articulated intermediate lever (20).

8. Device according to Claim 1, **characterized in that** an adjuster (23) can be articulated by adjusting units (18) without being coupled to them, via output points (25), the seat surface (1) which is connected to the adjuster (23) being articulated on three control rods (2).

9. Device according to Claim 1, **characterized in that** the seat surface (1) of the vehicle seat can be activated dynamically corresponding to the driving situation of the vehicle via the individually activatable adjusting units (6, 7; 10, 18).

10. Device according to Claim 1, **characterized in that** the control rods (2, 26) have a torsionally soft region (29) and, at their ends, flexurally soft regions (30, 31).

11. Device according to Claim 1, **characterized in that** the control rods (2, 26) are equipped at their ends with elastomer bearings (37) which contain a bearing shell (40) which is moveable relative to a bearing body (42).

12. Device according to Claim 1, **characterized in that** the control rods (2, 26) include a length-compensating means (32) and/or are provided with spherical bearings (43), hydraulic bushings (44) or collar-type bearings (45).

13. Device according to Claim 1, **characterized in that** the control rods (2, 26) contain at their ends transmission elements (34) which are articulated in joints (33) and permit a form-fitting connection to other components.

## Revendications

1. Dispositif de transmission de mouvements de réglage de sièges d'un véhicule (1), dans lequel un engrenage de déplacement (10, 18) entre les entraînements (6, 7) et les barres de liaison (11, 12, 13, 14, 19, 20 ; 2, 26) transmet le mouvement de réglage,
**caractérisé en ce qu'**
une première unité de réglage (10) comprend des barres de liaison (13, 14) articulées au niveau des sorties (25) pour incliner la surface de siège (1) et une seconde unité de réglage (18) désaccouplée de la première (10) qui permet à la surface de siège (1) d'effectuer un réglage longitudinal/transversal.

2. Dispositif selon la revendication 1,
**caractérisé en ce qu'**
un élément de liaison (17), un organe de rotation pour les barres de liaison (11, 12, 13, 14) articulées au niveau des sorties (25), est disposé sur la première unité de réglage (10).

3. Dispositif selon la revendication 2,
**caractérisé en ce que**
la première unité de réglage (10) munie de l'élément de liaison (17) est logée en dessous d'une surface de siège (1) d'un siège de véhicule, laquelle peut être déplacée au niveau de ses coins dans quatre barres de liaison articulées (2).

4. Dispositif selon la revendication 2,
**caractérisé en ce que**
la première unité de déplacement (10) munie de l'élément de liaison (17) est logée en dessous d'une surface de siège (1) d'un siège de véhicule, laquelle est logée sur des guidages conducteurs dans un segment coulissant de coquille sphérique.

5. Dispositif selon la revendication 2,
**caractérisé en ce que**
l'élément de liaison (17) empêche la surface de siège (1) du siège du véhicule de tourner autour de l'axe en hauteur parallèlement à un variateur (23).

6. Dispositif selon la revendication 5,
**caractérisé en ce que**
les mouvements de réglage pour incliner la surface de siège (1) ainsi que pour faire basculer la surface de siège (1) autour de l'axe transversal sont transférés par le variateur (23) dans la surface de siège (1).

7. Dispositif selon la revendication 6,
**caractérisé en ce que**
le variateur (23) peut être déplacé aussi bien par l'élément de liaison (17) par la première unité de réglage (10) que par le biais un levier intermédiaire articulé (20) par la deuxième unité de réglage (18).

8. Dispositif selon la revendication 1,
**caractérisé en ce qu'**
un variateur (23) peut être articulé sans accouplement au niveau des sorties (25) d'unités de réglage (18), la surface de siège (1) reliée au variateur (23) étant articulée au niveau de trois barres de liaison (2).

9. Dispositif selon la revendication 1,
**caractérisé en ce que**
la surface de siège (1) du siège de véhicule peut être commandée de manière dynamique en fonction de la situation de conduite du véhicule par les unités de réglage (6, 7 ; 10, 18) pouvant être elles-mêmes commandées individuellement.

10. Dispositif selon la revendication 1,
**caractérisé en ce que**
les barres de liaison (2, 26) présentent une zone torsionable (29) et, à leurs extrémités, des zones flexibles (30, 31).

11. Dispositif selon la revendication 1,
**caractérisé en ce que**
les barres de liaison (2, 26) sont équipées, à leurs extrémités, de paliers en élastomère (37) qui contiennent une coquille de palier (40) relativement mobile par rapport à un corps de palier (42).

12. Dispositif selon la revendication 1,
**caractérisé en ce que**
les barres de liaison (2, 26) comprennent une compensation en longueur (32) et/ou sont munies de paliers sphériques (43), de coussinets hydrauliques (44) ou de paliers à collerettes (45).

13. Dispositif selon la revendication 1,
**caractérisé en ce que**
les barres de liaison (2, 26) contiennent, à leurs extrémités, des manchons de raccordement (34) articulés dans des articulations (33) qui permettent de les raccorder par complémentarité de forme à d'autres composants.
